# EUROPEAN PATENT APPLICATION

(11) **EP 4 645 681 A1**
(43) Date of publication of application: **05.11.2025**
(21) Application number: 24173898.8
(22) Date of filing: 02.05.2024
(51) Int. Cl.: H02P 29/024

(54) **POWER TOOL AND CONTROL METHOD OF THE SAME**

(71) Applicant: Techtronic Cordless GP, Anderson, SC 29621 (US)
(72) Inventor: CHEN, Zi Cong, Dongguan City, Guangdong Province, (CN); ZHANG, Bao An, Dongguan City, Guangdong Province, (CN); WEN, Chao, Dongguan City, Guangdong Province, (CN); LI, Yong Min, Dongguan City, Guangdong Province, (CN)
(74) Representative: Meissner Bolte Partnerschaft mbB

(57) **Abstract**

The present disclosure provides an electric power tool and a method of controlling the same. The power tool comprises a motor, a load detector configured to detect a changed load by measuring a change of a first physical quantity related to the motor operation; a controller configured to transition the motor from a first operating state to a second operating state when it is detected that the first physical quantity deviates from the first threshold and simultaneously deviates from the second threshold different from the first threshold in the same direction for a cumulative time reaching a pre-defined period of time; and is further configured to transition the motor from the second operating state back to the first operating state upon detection of a change of a second physical quantity of the motor by a predefined amount; wherein the motor has a reduced output in the second operating state than in the first operating state. According the present disclosure, when the tool experiences an overload, it maintains a reduced output level to remind that the tool is currently overloaded, and enables the restoration of normal output once the overload is alleviated.

## Description

### Technical Field:

The present disclosure pertains to power tools, and, in particular, to electric power tools capable of transitioning between operating states.

### Background:

Power tools typically incorporate an overload protection function. When the load applied to the motor exceeds a certain threshold, the motor automatically shuts down to prevent damage to the motor and other components. However, the sudden stoppage of the power tool disrupts the user's operation. For instance, during the use of certain electric tools like angle grinders, the operating current flowing through the motor may experience significant fluctuations due to complex working conditions, leading to frequent and substantial changes. Although each overcurrent event is brief, they could occur frequently. In the existing technologies, if the overload protection method described in prior art is followed, the overload protection activates immediately upon any overcurrent occurrence. While this prevents damage to the motor or battery, it hampers the functionality of the power tool. As a result, the power tool frequently comes to an abrupt halt, necessitating repeated interruptions in the user's work. The user must release and press the switch again to resume tool usage, leading to decreased operational efficiency and user satisfaction.

Therefore, there is a need to enhance the user experience by managing the frequency of power tool shutdowns while still ensuring adequate protection against overloading.

The purpose of the present disclosure is to address and partially improve the aforementioned issues associated with current methods. It aims to enhance the overload protection mechanism, resulting in a power tool that offers an improved user experience compared to previous designs.

### Summary

Features and advantages of the disclosure will be set forth in the description which follows, and in part will be obvious from the description, or can be learned by practice of the herein disclosed principles. The features and advantages of the disclosure can be realized and obtained by means of the instruments and combinations particularly pointed out in the appended claims.

In accordance with a first aspect of the present disclosure, there is provided an electric power tool comprising: a motor; a load detector configured to detect a changed load by measuring a change of a first physical quantity related to the motor operation; a controller configured to transition the motor from a first operating state to a second operating state when it is detected that the first physical quantity deviates from the first threshold and simultaneously deviates from the second threshold different from the first threshold in the same direction for a cumulative time reaching a pre-defined period of time; and is further configured to transition the motor from the second operating state back to the first operating state upon detection of a change of a second physical quantity of the motor by a predefined amount; wherein the motor has a reduced output in the second operating state than in the first operating state.

Advantageously, the motor has a smaller duty ratio of Pulse Width Modulation (PWM) in the second operating state than in the first operating state, or the motor has a discontinuity in the PWM waveform in the second operating state compared to the first operating state, or the motor has a higher or smaller frequency of PWM in the second operating state than in the first operating state.

Advantageously, each of the first and second physical quantities is selected from a list including current, voltage, temperature and motor speed; and wherein the second threshold corresponds to an overload threshold and the first threshold corresponds to a light load threshold.

Advantageously, the motor is transitioned from the first operating state to the second operating state upon detection of the following: when a current measured by the load detector constantly stays above a first pre-set current threshold, accumulated time of the current constantly or intermittently staying above the second pre-set current threshold greater than the first pre-set current threshold exceeds a pre-defined period of time; when a voltage measured by the load detector constantly stays below a first pre-set voltage threshold, accumulated time of the voltage constantly or intermittently staying below the second pre-set threshold less than the first pre-set threshold exceeds a pre-defined period of time; and when a motor speed measured by the load detector constantly stays below a first pre-set motor speed threshold, accumulated time of the motor speed constantly or intermittently staying below the second pre-set motor speed threshold less than the first pre-set motor speed threshold exceeds a pre-defined period of time.

Advantageously, the controller is further configured to control the motor to operate in a second operating state when the number of times the motor triggering overload protection reaches a pre-set number, or when the number of times the motor is transitioned from the first operating state to the second operating state reaches a pre-set number.

Advantageously, the controller is further configured to deactivate the motor after the motor has operated in the second operating state for a predetermined period of time, and wherein the pre-determined period of time is defined based on the temperature of the power tool, and/or a cumulative time of the power tool in the second operating state.

Advantageously, the electric power tool further includes a memory configure to store and update parameters of the second operating state to prevent loss of parameters caused by power loss, wherein the parameters are used together with detection of the load detector by the controller to determine subsequent operating state of the motor. Advantageously, the parameters is selected from a list at least including a motor speed, a temperature of the power tool, and duration of the motor in the second operating state.

In accordance with a second aspect of the present disclosure, there is provided a method to control operation of a motor of an electric power tool, the method comprising: detecting a changed load by measuring a change of a first physical quantity related to the operation of the motor; transitioning the motor from a first operating state to a second operating state when it is detected that the first physical quantity deviates from the first threshold and simultaneously deviates from the second threshold different from the first threshold in the same direction for a cumulative time reaching a pre-defined period of time; and transitioning the motor from the second operating state back to the first operating state upon detection of a change of a second physical quantity of the motor by a predefined amount; wherein the motor has a reduced output in the second operating state than in the first operating state.

Advantageously, the motor has a smaller duty ratio of Pulse Width Modulation (PWM) in the second operating state than in the first operating state, or the motor has a discontinuity in the PWM waveform in the second operating state compared to the first operating state, or the motor has a higher or smaller frequency of PWM in the second operating state than in the first operating state. Advantageously, each of the first and second physical quantities is selected from a list including current, voltage, temperature and motor speed; and wherein the second threshold corresponds to an overload threshold and the first threshold corresponds to a light load threshold.

Advantageously, the step of transitioning the motor from the first operating state to the second operating state upon detection of the following: when a current measured by the load detector constantly stays above a first pre-set current threshold, accumulated time of the current constantly or intermittently staying above the second pre-set current threshold greater than the first pre-set current threshold exceeds a pre-defined period of time; when a voltage measured by the load detector constantly stays below a first pre-set voltage threshold, accumulated time of the voltage constantly or intermittently staying below the second pre-set threshold less than the first pre-set threshold exceeds a pre-defined period of time; and when a motor speed measured by the load detector constantly stays below a first pre-set motor speed threshold, accumulated time of the motor speed constantly or intermittently staying below the second pre-set motor speed threshold less than the first pre-set motor speed threshold exceeds a pre-defined period of time.

Advantageously, the method further comprises deactivating the motor after the motor has operated in the second operating state for a predetermined period of time, wherein the pre-determined period of time is defined based on the temperature of the power tool, and/or a cumulative time of the power tool in the second operating state.

Advantageously, the method further comprises controlling the motor to constantly operate in a second operating state when the number of times the motor triggering overload protection reaches a pre-set number, or when the number of times the motor is transitioned from the first operating state to the second operating state reaches a pre-set number.

Advantageously, the method further comprises storing and updating parameters of the second operating state in a memory to prevent loss of parameters caused by power loss, wherein the parameters are used together with detection of the load detector by the controller to determine subsequent operating state of the motor, and wherein the parameters is selected from a list at least including a motor speed, a temperature of the power tool, and duration of the motor in the second operating state.

### Brief Description of the Drawings

In order to describe the manner in which the above-recited and other advantages and features of the disclosure can be obtained, a more particular description of the principles briefly described above will be rendered by reference to specific embodiments thereof which are illustrated in the appended Figures. Understanding that these Figures depict only exemplary embodiments of the disclosure and are not therefore to be considered to be limiting of its scope, the principles herein are described and explained with additional specificity and detail through the use of the accompanying Figures.

Preferred embodiments of the present disclosure will be explained in further detail below by way of examples and with reference to the accompanying Figures, in which:-
Figure 1 is a schematic diagram showing an electric power tool according to the first embodiment.
Figure 2 is an operation flowchart showing a process executed by an electric power tool according to the embodiment of Figure 1.
Figures 3A-3B illustrate current versus time plots employed for the determining the activation of an operating state switch.
Figures 4A-4B illustrate voltage versus time plots employed for the determining the activation of an operating state switch.
Figures 5A-5B illustrate speed versus time plots employed for the determining the activation of an operating state switch.
Figure 6 is a schematic diagram showing an electric power tool according to a second embodiment.
Figure 7 is an operation flowchart showing a process executed by an electric power tool according to the embodiment of Figure 4.

### Detailed Description

Various embodiments of the disclosure are discussed in detail below. While specific implementations are discussed, it should be understood that this is done for illustration purposes only. A person skilled in the relevant art will recognize that other components and configurations may be used without departing from the scope of the disclosure.

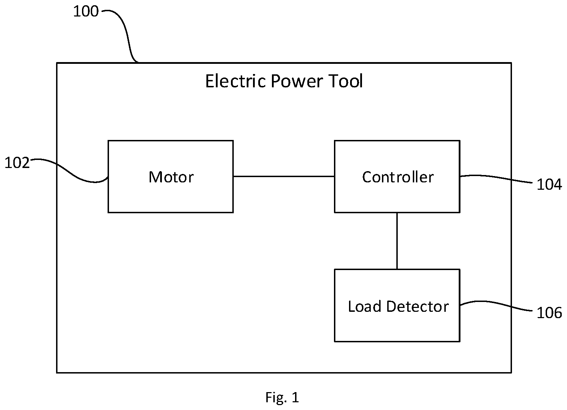

Referring to the drawings, Figure 1 depicts a schematic diagram of a power tool 100 in accordance with an embodiment of the present application. The power tool 100 comprises a motor 102, a controller 104, and a load detector 106. The power tool 100 can encompass various types of power tools, including handheld, portable, or push/drive tools such as angle grinders, drills, reciprocating saws, circular saws, trimmers, chain saws, lawn mowers, Pillar drills, and others.

In Figure 1, the motor 102 is designed to drive the working components (not shown). It can be a DC or AC motor, either brushed or brushless. The motor 102 can operate with different input voltages, such as 9V, 12V, 18V, 20V, or 40V DC, 110V or 240V AC, or any other suitable rated voltage. The controller 104 is responsible for adjusting the motor's operating state based on changes in the load of motor 102. The controller 104 may include a data processing unit, a data storage unit, and other relevant components. The controller 104 can be a standard motor controller that provides motor protection, control, and management functions. Alternatively, it can be an intelligent motor controller that incorporates intelligent programming and data storage capabilities.

The load detector 106 is designed to detect the motor's load condition by examining technical parameters associated with the motor. These parameters include, but are not limited to, current, voltage, motor speed, pulse width modulation (PWM) status, torque, rated power, and so on. Generally, an increase in load would result in decreased motor speed, increased current, or decreased voltage as measured by the load detector 106. Conversely, a decrease in load would lead to increased motor speed, decreased current, or increased voltage as detected by the load detector 106. The load detector 106 may include a sensor connected to the motor 102, such as a power meter for power measurement or a motor speed sensor like a Hall sensor for speed measurement. Additionally, the load detector may incorporate a temperature sensor to monitor the motor's temperature. Alternatively, the temperature sensor can be a separate detection unit independent of the load detector 106, directly communicating with the controller 104 to transmit the detected motor temperature parameters.

According on illustrative embodiment of the present disclosures, motor 102 has two distinct operating states: the first operating state and the second operating state. The first operating state represents the motor's normal operation, providing the desired performance to the user. The output of the second operating state significantly differs from that of the first state.

Generally, the duty cycle of the pulse signal determines the average voltage supplied to the motor and consequently affects the motor speed. A larger duty cycle results in a higher average voltage and faster motor speed, whereas a smaller duty cycle reduces the average voltage, resulting in a slower motor speed. At low duty cycles, the motor speed remains very low due to minimal changes in voltage and current. When switching to high duty cycles, both voltage and current increase, causing the speed to rise. When the duty cycle is high, the motor's current and voltage reach their rated values, and the speed gradually increases until it reaches its maximum.

In one embodiment, the output of the second operating state is lower than that of the first operating state. For example, a PWM output with a 10% duty cycle may be provided to the motor so that the output of the second operating state is smaller than that of the first operating state. As a result, the user may perceive a lower force output from the motor in the second operating state compared to the first operating state.

In another embodiment, the motor's second operating state involves a PWM output with a different frequency compared to the first operating state. For instance, the PWM frequency in the first operating state may be 10K Hz, while in the second operating state, it could be increased to 15K Hz or reduced to 7K Hz. This change in PWM frequency can generate audible signals or induce noticeable vibrations that can be sensed by users.

In yet another embodiment, the motor exhibits discontinuous output in the second operating state as opposed to the continuous output in the first operating state. This can be achieved by providing a pulse signal after a certain time interval. Specifically, in the second operating state, the motor follows a cycle where it outputs a PWM signal with a 0% duty cycle for the first 100ms of each cycle and then provides a 10% duty cycle for the next 10ms, creating an intermittent output pattern. Consequently, the motor's output becomes intermittent rather than continuous, creating a distinct impact effect so that the change of output can be readily sensed by users.

These differences in output allow users to easily differentiate between the first operating state and the second operating state, enabling them to recognize when the power tool enters the second operating state.

The controller 104 is configured to manage the motor 102 to switch between the first and second operating states.

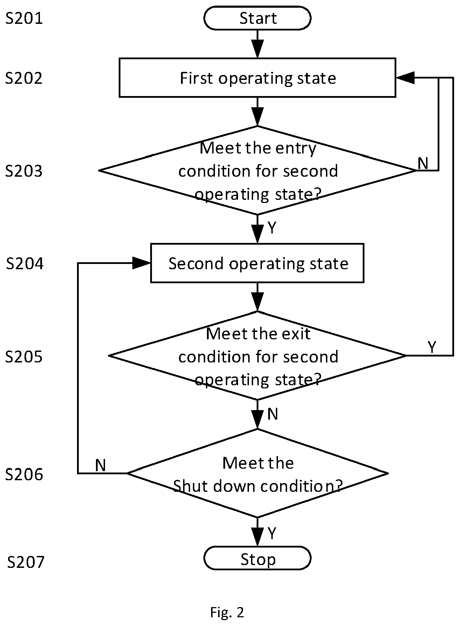

As shown in Figure 2, the process starts with step S201. In step S201, the power tool 100 may be started by turning on the power of the power tool 100. For example, the power tool 100 can be turned on by pressing the switch. Afterwards, in step S202, the electric tool enters the first operating state and provides output as the user expected.

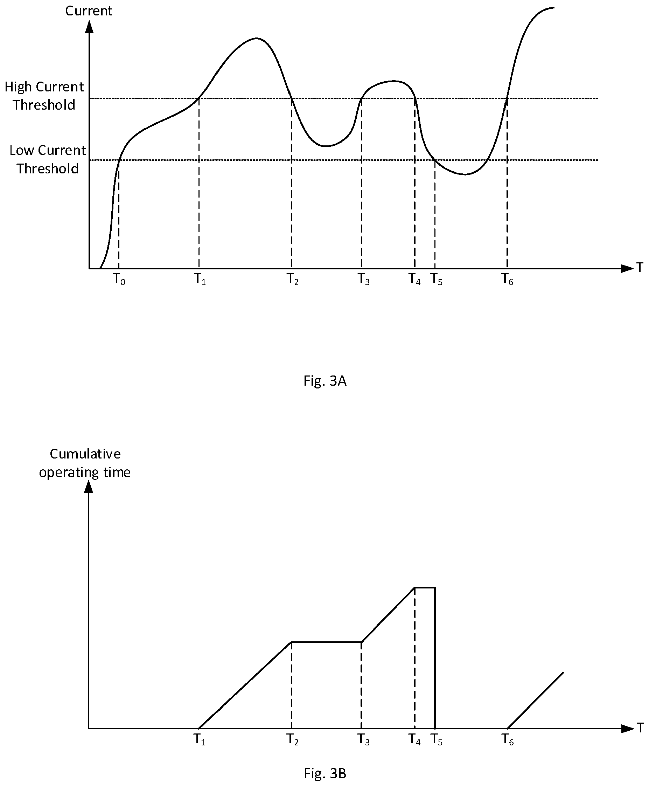

After the motor enters the first operating state, the load detector 106 starts to monitor any changes in the first physical quantity associated with the motor 102. The controller 104 is configured to determine whether the motor 102 is in an overloaded state based on the results provided by the load detector 106 and calculate the time of the motor being in the overloaded state. For example, it determines if the motor has been continuously in an overloaded state for a period of time that exceeds a threshold or accumulated time of the motor being in the overloaded state, or if the motor frequently experiences overloads, as shown in steps S203. Here, the first physical quantity may be current, voltage, motor temperature, torque or motor speed, etc. Generally speaking, the overload of the motor can be manifested as the motor's over-current state, low-voltage state or locked-rotor state, etc. The controller 104 can determine the overload status of the motor through changes in these parameters. Specific methods to determine the overload status and conditions to trigger the change of operating states are set out in more details in Figures 3 - 5. If it is determined that any of the above situations occur, for example, when the controller 104 detects that the cumulative duration of overload reaches a duration threshold, or the number of times the motor triggering overload protection reaches a pre-set number, or when the number of times the motor is switched from the first operating state to the second operating state reaches a pre-set number, the controller 104 will determine that the entry condition for the second operating state is met and thus will change the operating state of the motor 102 from the first operating state changes to the second operating state, as shown in step S204.

After the motor 102 enters the second operating state, the controller 104 is further configured to check the conditions for exiting the second operating state are met based on the change of the second physical quantity and to determine the next state, as shown in step S205. If the exit condition is met, the controller 104 will change the operating state of the motor from the second operating state back to the first operating state. The exit condition is associated with changes in a second physical quantity, and the second physical quantity includes but are not limited to motor temperature, motor speed, current, voltage, etc. The motor temperature of entering the second operating state could be used in the determination.

For example, the exit condition may be that the motor temperature decreases to a predetermined threshold. When the motor 102 is in the second operating state, if it is monitored that the temperature of the motor drops to a predetermined temperature value, the motor will change from the second operating state back to the first operating state. The predetermined value may be a fixed value preset based on experience. Alternatively, if it is monitored that the temperature of the motor drops by a predetermined amount, the motor changes from the second operating state back to the first operating state, and the predetermined amount may be associated with the temperature when entering the second operating state. In one embodiment of the present application, if the temperature of the motor is 80 °C when it enters the second operating state, 5°C is used as the threshold of the drop amount, that is, when the motor drops to 75°C, the controller 104 switches the motor from the second operating state to the first operating state. In another embodiment of the present application, if the temperature of the motor is 70 °C when it enters the second operating state, then 10 °C is used as the threshold value of the decrease amount, that is, when the motor drops to 60 °C, the controller 104 104 switches the motor from the second operating state to the first operating state.

In addition to temperature changes, the exit condition parameter can also involve an increase in rotational speed. The controller 104in this application can utilize a Hall sensor to detect the motor's rotation speed and determine whether to switch the motor back to the first operating state. If the controller 104detects that the motor's rotational speed exceeds a preset threshold, it can determine that the tool's load is zero or very low. Consequently, the controller 104determines that the motor 102 is no longer in an overload state, prompting the motor to transition from the second operating state back to the first operating state. This allows the motor's output to return to normal. The predetermined value for motor speed can be any suitable empirical value. In one embodiment, the rotational speed threshold is set at 1000 RPM. When the motor's speed exceeds 1000 RPM, the motor exits the second operating state and resumes the first operating state, enabling the power tool to function normally.

These examples demonstrate that the determination to return the motor from the second operating state to the first operating state can be based on detecting changes in temperature or rotational speed. Apart from temperature and rotational speed, parameters such as current, voltage, and PWM output can also be utilized to determine whether the motor should transition back to the first operating state from the second operating state. Additionally, a combination of temperature change and speed change, or any combination of parameters including current change, voltage change, PWM output change, motor temperature change, and speed change can be used to make this determination.

Furthermore, the motor can transition from the second operating state to the first operating state by releasing the switch of the power tool and then pressing it again. However, if the tool temperature is still high at that time, even if the switch is released and pressed again, the tool will not exit the second operating state and return to the first operating state. However, once a decrease in the tool's temperature is detected, it will become possible to exit the second operating state and re-enter the first operating state by releasing the switch and subsequently pressing it again.

In step S205, if it is determined that the exit condition is not met, the controller 104 proceeds to step S206 to conduct further checks on the motor's continuous working time or accumulated working time in the second operating state so as to determine if the shutdown condition is met. Based on this information, it determines whether to continue operating in the second state or initiate a shutdown. As depicted in S206, when the continuous working time or accumulated working time of the motor in the second operating state exceeds the predetermined time threshold, the controller 104 issues a shutdown command to halt the motor's operation, cease the output of the electric tool, and proceed to step S207.

In one embodiment of the present application, the predetermined time threshold in step S206 is dependent on the measured motor temperature. For example, at a temperature of 25°C, if the motor remains in the second operating state for another 5 seconds without transitioning back to the first operating state, the controller 104 will power off the tool. In other variations, if the motor temperature detected by the tool is 50°C, the threshold time is set to 2 seconds. Similarly, if the motor temperature reaches 70°C, the threshold time is set to 0 seconds, resulting in an immediate shutdown of the power tool.

In another embodiment of the present application, the time threshold is determined by the accumulated time the power tool stays in the second operating state. For instance, the shutdown-triggering time threshold can be set within the range of 0 to 5 seconds. If the cumulative time in the second operating state is 0 seconds, the threshold time is set to 5 seconds. As the cumulative time increases to 10 seconds, the threshold time is reduced to 3 seconds. When the accumulated time reaches 30 seconds, the set time threshold becomes 0 seconds, resulting in an immediate shutdown. Therefore, if the power tool operates in the second state for 30 seconds, it will be turned off instantly. If it operates for 10 seconds and remains in the second state for an additional 3 seconds without transitioning back to the first state, the power tool will be powered off. Similarly, if the power tool just enters the second operating state and remains in that state for 5 seconds without transitioning back, it will be powered off.

Figures 3-5 provide a detailed illustration of a preferred embodiment for determining whether the motor should return to the second working state based on various parameters. In industrial operations, due to the complex nature of operating conditions, instances of excessive instantaneous current often occur. To prevent frequent misjudgement of the motor 102 being in an overload state by the controller 104, the preferred embodiments of this application offer a more precise method for determining the overload state.

Figures 3-5 introduce different time points and thresholds to aid in this determination. In the diagrams, "t" represents the current moment when the motor is in operation, while T1-T6 represent time points when the load current, load voltage, or motor speed reaches specific thresholds, and CT represents cumulative operating time length.

Figure 3A and 3B presents a preferred embodiment that determines whether the motor should return to the second working state based on the current. This embodiment establishes a high current threshold and a low current threshold. The high current threshold serves as the overload threshold. When the actual load current surpasses this threshold, it indicates that the motor 102 is experiencing a load exceeding its rated capacity, thus entering an overload state. On the other hand, the low current threshold represents the light load threshold. If the load current falls below this threshold, it signifies that the motor 102 is operating under a low load, at a low speed, or even in a no-load condition.

In this embodiment, if the load detector 106 monitors the load current consistently remains above the light load threshold, the load detector 106 will monitor whether the load current reaches the overload threshold and calculate the cumulative time during which the load current remains above the overload threshold. If this cumulative time exceeds the preset time threshold, the controller 104 issues an instruction to transition the motor 102 from the first operating state to the second operating state.

In particular, when the load detector 106 detects that the actual load current exceeds the rated load current, the controller 104 determines that the motor 102 is in an overcurrent state, indicating an overload condition. However, instead of immediately switching the motor 102 from the second operating state to the first operating state, the controller 104 initiates a timing mechanism to measure the duration of the load current exceeding the overload current threshold. If the load current falls below the overload current threshold but above the light load current threshold during the timing period, the timing is suspended, and the elapsed time is stored in the data storage unit or memory. When the load current surpasses the overload threshold again, the timing resumes. Once the accumulated time reaches the predetermined time threshold, the controller 104 transitions the motor 102 from the second operating state to the first operating state.

During the timing or suspension periods, if the load detector 106 detects that the actual load current is lower than the light load threshold, it signifies that the motor is operating under a light load, at a low speed, or in a no-load condition. In such cases, the timer terminates the timing process and resets the previously accumulated time. This embodiment enables more accurate determination of the motor's operating state, particularly in assessing whether the motor 102 has been continuously or intermittently operating in an overloaded state for a prolonged duration, or whether it has only experienced a brief overload. Consequently, it aids in deciding whether to activate the overload protection mechanism or even initiate a shutdown. This approach prevents misjudgements caused by instantaneous overloads, allowing the controller 104 to make more accurate decisions regarding state transitions and significantly enhancing the user experience.

In the embodiment depicted in Figures 3A-3B, the preset cumulative duration threshold for overload is Th, and the cumulative duration is CT, then once the cumulative duration reaches the overload cumulative duration threshold, i.e., CT = Th, the controller 104 will immediately switch the motor's 102 operating state from the first operating state to the second operating state without continuing in the first operating state. If the accumulated overload duration CT is less than Th, the change in the operating state will not be triggered, meaning the controller 104 will maintain the motor 102 in the first operating state.

In the first variation of embodiment shown in Figures 3A-3B, CT is calculated as CT = (T2 - T1) + (T4 - T3), assuming Th > CT. When the electric tool is started, the motor enters the working mode and operates in the first operating state. At time t = T0, the motor transitions from the light load mode to the normal working mode. From T0 to T1, the power tool operates in the first working state. At time t = T1, the load detector 106 detects that the load current exceeds the overload current threshold, and the timer starts counting. During the period from T1 to T2, although an overload occurs, the power tool remains in the first working state. At time t = T2, the load detector 106 detects that the load current returns to the overload threshold and continues to decrease. At this point, the timer temporarily stops counting and stores the previously measured time period (T2 - T1) in memory. From T2 to T3, the power tool operates in the first operating state with a normal load. At time t = T3, the load detector detects that the load current exceeds the overload threshold again, and the timer resumes counting. During the period from T3 to T4, although an overload occurs, the power tool remains in the first working state. At time t = T4, the load detector 106 detects that the load current is lower than the overload threshold but higher than the light load threshold. The timer temporarily stops counting, and the previously accumulated time length CT = (T2 - T1) + (T4 - T3) is stored in memory. During the above operation, since CT is smaller than Th, the controller 104 maintains the operating state of the motor 102 in the first operating state. Next, at time t = T5, the load detector 106 detects that the load current is lower than the light load threshold. The timer stops counting and clears the previously accumulated time, setting it back to zero. From T5 to T6, the power tool continues to operate in the first working state. At time t = T6, the load detector 106 senses that the load current exceeds the overload threshold, and the timer restarts from zero.

The motor's operation flow and judgment method in the above embodiment are based on the assumption that Th > CT. In the second variation of embodiment, during the first overload period, i.e., from T1 to T2, if the time CT = t - T1 reaches Th, the controller 104 immediately changes the motor's 102 operating state from the first operating state to the second operating state. Similarly, in the third variation of embodiment, during the second overload period i.e., from T3 to T4, if the time CT = (t - T3) + (T2 - T1) reaches Th, the controller 104 changes the motor's 102 operating state from the first operating state to the second operating state without continuing in the first operating state.

Regarding the settings of the overload threshold, light load threshold, and overload cumulative duration threshold for the current, in one embodiment according to this application, the overload current can be set to 110 amps (A), the light load current can be set to 40A, and the overload duration threshold Th can be set to 500 milliseconds (ms). For example, if the motor's 102 rated current is 100A, when the load detector 106 detects that the load current is 110A, the motor 102 is in an overcurrent state, indicating an overload state. When the load detector 106 detects that the load current is 40A, the motor 102 is in a light load state.

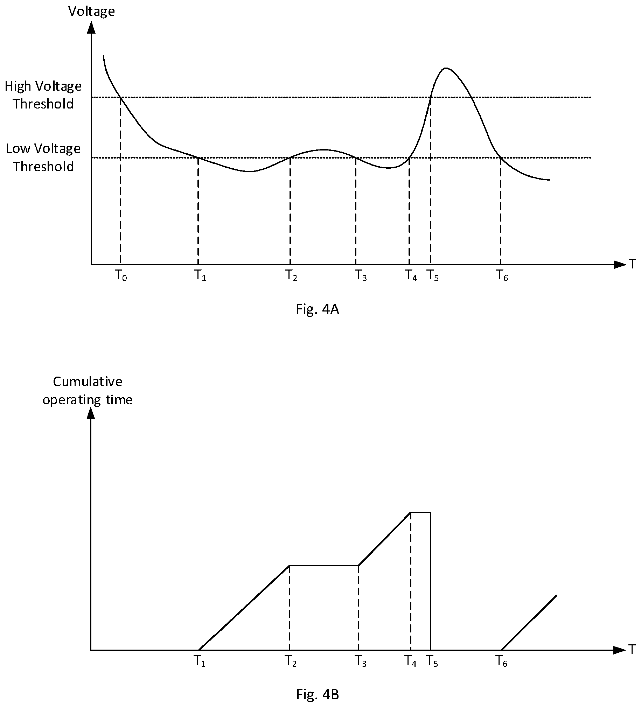

Figures 4A-4B present another preferred embodiment that determines whether to trigger a switch in operating states based on voltage. In this embodiment, a high voltage threshold represents the light load threshold, and a low voltage threshold represents the overload threshold. When the measured load voltage falls below the low voltage threshold, it signifies that the motor's 102 actual load surpasses the rated load, putting the motor in an overload state. Conversely, when the load voltage exceeds the high voltage threshold, the motor is in a light load, high-speed, or idle state. If the actual load voltage falls between these two thresholds, it signifies that the motor is operating normally. In this embodiment, if the load voltage remains consistently below the light load threshold, the load detector monitors whether the load voltage continuously remains below the overload threshold or intermittently drops below it, for a cumulative time surpassing a preset value. When this cumulative time exceeds the preset value, the controller 104 changes the operating state, thereby transitioning the motor from the first operating state to the second operating state.

Similar to the embodiment shown in Figure 3A, when the load detector 106 detects that the actual load voltage is lower than the rated load voltage, the controller 104 identifies it as a low voltage state (i.e., overload state). However, the controller 104 does not immediately switch the motor from the first operating state to the second operating state. Instead, it begins timing the duration in which the load voltage remains below the low voltage threshold. If the load voltage exceeds the voltage threshold corresponding to overload, the timing is paused, and the accumulated time is stored in the data storage unit. Timing resumes if the load voltage falls below the overload threshold again. Once the accumulated time reaches the predetermined time threshold, the controller 104 switches the motor 102 from the second operating state to the first operating state.

During the timing or pause period, if the load detector 106 detects that the actual load voltage exceeds the high voltage threshold, i.e., light load threshold, it indicates that the motor is operating under light load, high-speed, or no-load conditions. In such cases, the timing is terminated, and the previously stored timing value indicating overload time is cleared. This embodiment offers improved accuracy in determining the motor's operational status, particularly regarding whether it remains continuously overloaded or experiences only brief periods of overload, thereby avoiding misjudgements arising from momentary overloads. Consequently, the controller 104 can make more precise decisions regarding operating state switching.

In the embodiment depicted in Figures 4A-4B, the preset cumulative duration threshold for overload is Th, and the cumulative duration is CT, then once the cumulative duration reaches the overload cumulative duration threshold, i.e., CT = Th, the controller 104 will immediately switch the motor's 102 operating state from the first operating state to the second operating state without continuing in the first operating state. If the accumulated overload duration CT is less than Th, the change in the operating state will not be triggered, meaning the controller 104 will maintain the motor 102 in the first operating state.

In the embodiment illustrated in Figures 4A-4B, the controller 104 changes in the motor's operating state from the first state to the second state when the cumulative duration of overload, denoted as CT, reaches a preset threshold, Th. This means that once CT equals Th (CT = Th), the controller 104 immediately initiates the operating state switch, without prolonging operation in the first state. If the accumulated overload duration CT is less than Th, no change in the operating mode is triggered, and the controller 104 maintains the motor 102 in the first operating state.

In the first variation of the embodiment depicted in Figures 4A-4B, CT is calculated as (T2 - T1) + (T4 - T3), assuming Th is greater than CT. When the power tool is started, the motor enters the working mode and operates in the first operating state. At t = T0, the motor transitions from the light load mode to the normal working mode. During the interval between T0 and T1, the power tool operates in the first operating state. At t = T1, the load detector 106 detects that the load voltage falls below the low voltage threshold, and the timer begins counting. From T1 to T2, although an overload occurs, the power tool remains in the first operating state. At t = T2, the load detector 106 detects that the load voltage returns to the overload threshold and continues to rise. Consequently, the timer temporarily halts counting and stores the previously measured time, CT = T2 - T1, in memory. From T2 to T3, the power tool remains in the first operating state, and the load is within the normal range. At t = T3, the load detector detects that the load voltage falls below the overload threshold once again, leading to the timer resuming its count. From T3 to T4, despite an overload occurring, the power tool continues to operate in the first state. At t = T4, the load detector 106 registers that the load voltage surpasses the overload threshold but remains lower than the light load threshold. Consequently, the timer temporarily halts counting, and the previously stored accumulated time, CT = (T2 - T1) + (T4 - T3), is stored in memory.

During the above operation, as CT = (T2 - T1) + (T4 - T3) is smaller than Th, the controller 104 maintains the motor 102 in the first operating state.

Next, at t = T5, the load detector 106 detects that the load voltage exceeds the light load threshold which indicates a light load or idle state. At this point, the timer stops counting and resets the previously stored accumulated time to zero. From T5 to T6, the power tool operates in the first operating state. At t = T6, the load detector 106 senses that the load voltage falls below the overload threshold once again, prompting the timer to restart counting from zero.

The motor's operation flow and judgment method in the aforementioned embodiment are based on the assumption that Th > ((T2 - T1) + (T4 - T3)). In the second variation of the embodiment, during the first overload period (T1 to T2), if the time CT = (t - T1) reaches Th, the controller 104 immediately changes the operating state of the motor 102 from the first operating state to the second operating state. Similarly, in the third variation of embodiment, during the second overload period (T3 to T4), if the time of CT = (t - T3) + (T2 - T1) reaches Th, the controller 104 switches the motor 102 from the first state to the second state without further operation in the first state.

Regarding the settings for the overload threshold, light load threshold, and overload cumulative duration threshold of the voltage, in one embodiment according to this disclosure, the high voltage threshold corresponding to the light load threshold can be set at 14 volts, the low voltage threshold corresponding to the overload threshold at 10 volts, and the overload duration threshold Th at 10 ms. As such, when the load detector 106 detects that the motor's voltage is 8V, the controller 104 determines that the motor 102 is in a low voltage state, indicating an overload condition; and when the load detector 106 detects that the motor's voltage is 15V, the controller 104 determines that the motor 102 is in a high voltage state, indicating a light load condition.

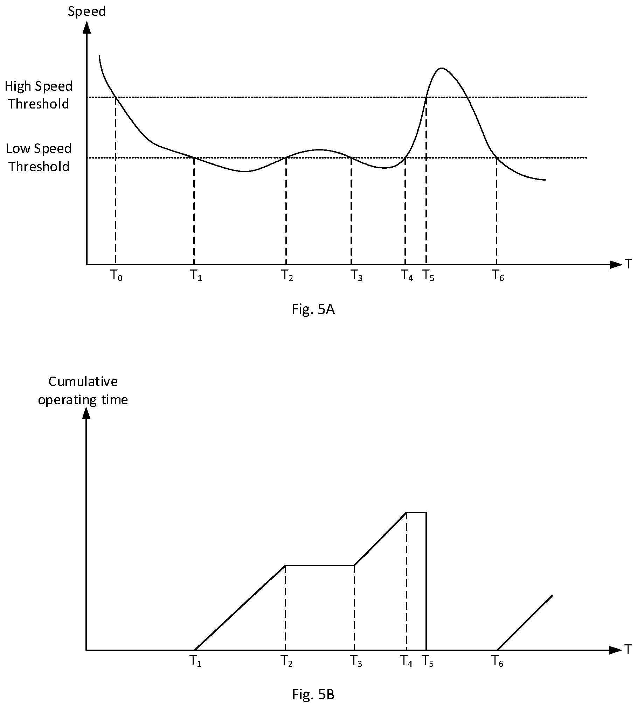

Figures 5A and 5B depict a preferred embodiment for determining the overload status based on motor speed. This embodiment operates similarly to the embodiment shown in Figures 4A-4B. It involves setting a high rotational speed threshold and a low rotational speed threshold. The low-speed threshold serves as the overload threshold, indicating that the actual motor load exceeds the rated load and the motor is in an overloaded state. Conversely, the high-speed threshold represents the light load threshold. When the speed surpasses this threshold, the motor is operating under a light load, low-speed, or no-load condition.

In this embodiment, if the motor speed continues to stay below the higher speed threshold, the controller 104 checks if the cumulative time during which the speed remains below the low-speed threshold exceeds the preset value. Upon detecting this condition, the controller 104 triggers a change in the motor's operating state from the first operating state to the second operating state.

The mechanism of the embodiment of Figures 5A-5B is identical to that of Figures 4A-4B. In the embodiment shown in Figures 5A and 5B, assuming the preset overload cumulative duration threshold is Th, the controller 104 immediately switches the motor's operating state from the first operating state to the second operating state once the cumulative duration reaches Th. If the accumulated time is less than Th, no change in the operating mode is triggered, and the controller 104 maintains the motor 102 in the first operating state.

In the first variation of the embodiment depicted in Figures 5A-5B, CT is calculated as (T2 - T1) + (T4 - T3), assuming Th is greater than CT.

When the power tool is started, the motor enters the working mode and operates in the first operating state. At t = T0, the motor starts to operate. From T0 to T1, the power tool operates in the first state. At t = T1, the load detector 106 detects that the load speed falls below the low-speed threshold and continues to fall, then the timer starts counting. Between T1 and T2, despite an overload occurring, the power tool remains in the first operating state. At t = T2, the load detector 106 detects that the load speed returns to the low threshold and continues to rise. The timer temporarily pauses counting and stores the previously measured time period, T2 - T1, in memory. From T2 to T3, the power tool operates in the first state, and the load is within the normal range. At t = T3, the load detector detects that the load speed falls below the low threshold once again, prompting the timer to resume counting. Between T3 and T4, despite an overload occurring, the power tool continues to operate in the first operating state. At t = T4, the load detector 106 registers that the load speed exceeds the low threshold but remains lower than the light load threshold. The timer temporarily halts counting, and the previously stored accumulated time, CT = (T2 - T1) + (T4 - T3), is stored in memory.

In the above operation, since CT = (T2 - T1) + (T4 - T3) is smaller than Th, the controller 104 maintains the motor 102 in the first operating state.

Next, at t = T5, the load detector 106 detects that the load speed exceeds the high load threshold. The timer stops counting and resets the previously stored accumulated time to zero. From T5 to T6, the power tool continues to operate in the first operating state. At t = T6, the load detector 106 detects that the load speed falls below the low threshold again, and the timer restarts counting from zero.

The motor's operation flow in this embodiment is based on the assumption that Th > ((T2 - T1) + (T4 - T3)). In the second variation of the embodiment, during the first overload period (T1 to T2), if the time CT = (t - T1) reaches Th, the controller 104 immediately changes the motor's operating state from the first operating state to the second operating state. Similarly, in the third variation of embodiment, during the second overload period (T3 to T4), if the time of CT = (t - T3) + (T2 - T1) reaches Th, the controller 104 switches the motor from the first operating state to the second operating state without further operation in the first state.

Regarding the settings for the low-speed threshold (i.e., overload threshold), high-speed threshold (i.e., light load threshold), and overload cumulative duration threshold, in this embodiment, the overload threshold can be set to 500 RPM, the light load threshold can be set to a specific value (represented as 800 RPM), and the overload duration threshold Th can be set to a specific value (represented as 350 ms). For example, if the locked-rotor speed of the power tool is 500 RPM, when the load detector 106 detects that the speed is 400 RPM, the controller 104 determines that the power tool is in a stalled state, indicating an overload condition.

Figures 3-5 illustrate the conditions for determining the operating state of the motor (referred to as the first operating state and the second operating state) based on parameters such as current, voltage, and rotational speed. Additionally, according to another embodiment of this disclosure, the decision to switch the motor 102 to the second operating state can also depend on the number of times the overload protection is activated, or the number of times the motor being switched from the first operating state to the second operating state, exceeding a predetermined threshold. The specific threshold for overload protection activations can vary depending on different conditions of the power tool 100. It can be adjusted based on temperature variations. For instance, when the tool is at normal temperature, the threshold for number of times of overload activations can be set to 10 times, while at a temperature of 60°C, it can be set to 4 times.

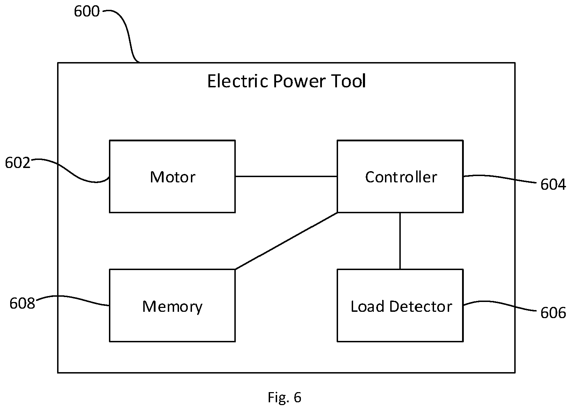

Figure 6 illustrates an alternative embodiment of the present disclosure, displaying a power tool design. In comparison to the power tool 100 depicted in Figure 1, the power tool 600 shown in Figure 6 further includes a memory 608 in addition to the motor 602, controller 604, and load detector 606. This memory is configured to store data generated by the load detector 606 and parameters associated with the second operating state. The motor 602, controller 604, and load detector 606 in this embodiment may be the same as those in the embodiment of Figure 1. The control method and mechanism depicted in Figures 2-5 are also applicable to the embodiment presented in Figure 6. In embodiment of Figure 6, the memory 608 is an external memory that can communicate with the controller 604 or can be integrated into the controller 604.

The memory 608 is configured to store parameters related to the second working state, which are updated in real time. Importantly, the memory 608 provides power-down protection by storing parameters, such as motor temperature, motor speed, accumulated time in the second state, etc., during a sudden power outage in the second operating state. Upon power restoration, the controller 604 reads these parameters from the memory 608 and utilizes them to determine whether the motor should exit the second operating state, continue in the second opera ting state, or shut down.

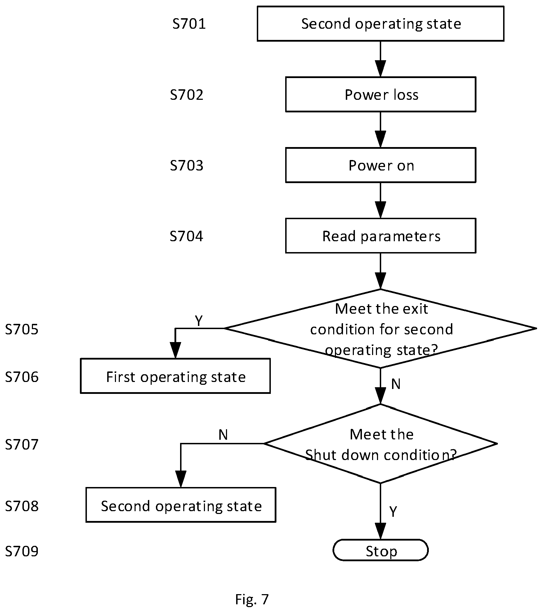

Figure 7 illustrates the operational flow of the electric tool in the embodiment shown in Figure 6 when encountering a power outage during the second working state. It should be noted that the working mode and workflow of the electric tool depicted in Figure 6 are substantially similar to those of the embodiment shown in Figs 1-5 under normal power conditions.

As shown in Figure 7, initially, in step s701, the electric tool 600 is in the second operating state. Subsequently, in step s702, a power loss event occurs. Following the power loss, in step s703, the power tool is powered on again. Upon power restoration, the controller 604 reads the parameters pertaining to the previous second operating state from the memory 608 in step s704. Based on the read parameters, the controller 604 determines whether the motor should transition from the second operating state back to the first operating state, continue in the second operating state, or shut down, as illustrated in steps s705-709. These steps correspond to the judgment mechanisms and control methods described in steps s205-s207 of Figure 2 and need not be further elaborated.

In some embodiments, the initial values and various thresholds disclosed herein may be preconfigured by the manufacturer and stored in the controller 104.

The above embodiments are described by way of example only. Many variations are possible without departing from the scope of the disclosure as defined in the appended claims. For clarity of explanation, in some instances the present technology may be presented as including individual functional blocks including functional blocks comprising devices, device components, steps or routines in a method embodied in software, or combinations of hardware and software.

According the present disclosure as discussed above in detail, when the tool experiences an overload, it maintains a reduced output level. This serves a dual purpose: firstly, it acts as a reminder that the tool is currently overloaded, and secondly, it enables the restoration of normal output once the overload is alleviated. However, if the tool encounters frequent overload situations or remains overloaded for an extended period, it will trigger the over-temperature protection and shut off the output completely. As a result, the objectives of this design as follows are achieved:
- To prevent the tool from shutting down due to overheating, frequent overloading, or prolonged overloading. This ensures that users do not mistakenly perceive the tool as being damaged.
- Limiting the tool's output helps prevent further temperature escalation and facilitates faster cooling when operating without a load.
- Avoiding frequent overload protection activations due to the delay in temperature conduction, which may compromise the tool's ability to function optimally under normal conditions.

Methods according to the above-described examples can be implemented using computer-executable instructions that are stored or otherwise available from computer readable media. Such instructions can comprise, for example, instructions and data which cause or otherwise configure a general-purpose computer, special purpose computer, or special purpose processing device to perform a certain function or group of functions. Portions of computer resources used can be accessible over a network. The computer executable instructions may be, for example, binaries, intermediate format instructions such as assembly language, firmware, or source code. Examples of computer-readable media that may be used to store instructions, information used, and/or information created during methods according to described examples include magnetic or optical disks, flash memory, Universal Serial Bus (USB) devices provided with non-volatile memory, networked storage devices, and so on.

Devices implementing methods according to these disclosures can comprise hardware, firmware and/or software, and can take any of a variety of form factors. Typical examples of such form factors include laptops, smart phones, small form factor personal computers, personal digital assistants, and so on. Functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are means for providing the functions described in these disclosures.

Although a variety of examples and other information was used to explain aspects within the scope of the appended claims, no limitation of the claims should be implied based on particular features or arrangements in such examples, as one of ordinary skill would be able to use these examples to derive a wide variety of implementations. Further and although some subject matter may have been described in language specific to examples of structural features and/or method steps, it is to be understood that the subject matter defined in the appended claims is not necessarily limited to these described features or acts. For example, such functionality can be distributed differently or performed in components other than those identified herein. Rather, the described features and steps are disclosed as examples of components of systems and methods within the scope of the appended claims.

## Claims

1. An electric power tool comprising:
a motor;
a load detector configured to detect a changed load by measuring a change of a first physical quantity related to the motor operation;
a controller configured to transition the motor from a first operating state to a second operating state when it is detected that the first physical quantity deviates from the first threshold and simultaneously deviates from the second threshold different from the first threshold in the same direction for a cumulative time reaching a pre-defined period of time;
and is further configured to transition the motor from the second operating state back to the first operating state upon detection of a change of a second physical quantity of the motor by a predefined amount;
wherein the motor has a reduced output in the second operating state than in the first operating state.

2. The electric power tool according to claim 1, wherein the motor has a smaller duty ratio of Pulse Width Modulation (PWM) in the second operating state than in the first operating state, or the motor has a discontinuity in the PWM waveform in the second operating state compared to the first operating state, or the motor has a higher or smaller frequency of PWM in the second operating state than in the first operating state.

3. The electric power tool according to claim 1 or 2, wherein each of the first and second physical quantities is selected from a list including current, voltage, temperature and motor speed; and
wherein the second threshold corresponds to an overload threshold and the first threshold corresponds to a light load threshold.

4. The electric power tool according to claim 1 or 2, wherein the motor is transitioned from the first operating state to the second operating state upon detection of the following:
when a current measured by the load detector constantly stays above a first pre-set current threshold, accumulated time of the current constantly or intermittently staying above the second pre-set current threshold greater than the first pre-set current threshold exceeds a pre-defined period of time;
when a voltage measured by the load detector constantly stays below a first pre-set voltage threshold, accumulated time of the voltage constantly or intermittently staying below the second pre-set threshold less than the first pre-set threshold exceeds a pre-defined period of time; and
when a motor speed measured by the load detector constantly stays below a first pre-set motor speed threshold, accumulated time of the motor speed constantly or intermittently staying below the second pre-set motor speed threshold less than the first pre-set motor speed threshold exceeds a pre-defined period of time.

5. The electric power tool according to claim 3 or 4, wherein the controller is further configured to control the motor to operate in a second operating state when the number of times the motor triggering overload protection reaches a pre-set number, or when the number of times the motor is transitioned from the first operating state to the second operating state reaches a pre-set number.

6. The electric power tool according to any preceding claim, wherein the controller is further configured to deactivate the motor after the motor has operated in the second operating state for a predetermined period of time, and wherein the pre-determined period of time is defined based on the temperature of the power tool, and/or a cumulative time of the power tool in the second operating state.

7. The electric power tool according to any preceding claim, further including a memory configure to store and update parameters of the second operating state to prevent loss of parameters caused by power loss, wherein the parameters are used together with detection of the load detector by the controller to determine subsequent operating state of the motor.

8. The electric power tool according to claim 7, wherein the parameters is selected from a list at least including a motor speed, a temperature of the power tool, and duration of the motor in the second operating state.

9. A method to control operation of a motor of an electric power tool, the method comprising:
detecting a changed load by measuring a change of a first physical quantity related to the operation of the motor;
transitioning the motor from a first operating state to a second operating state when it is detected that the first physical quantity deviates from the first threshold and simultaneously deviates from the second threshold different from the first threshold in the same direction for a cumulative time reaching a pre-defined period of time; and
transitioning the motor from the second operating state back to the first operating state upon detection of a change of a second physical quantity of the motor by a predefined amount;
wherein the motor has a reduced output in the second operating state than in the first operating state.

10. The method to control operation of the motor according to claim 9, wherein the motor has a smaller duty ratio of Pulse Width Modulation (PWM) in the second operating state than in the first operating state, or the motor has a discontinuity in the PWM waveform in the second operating state compared to the first operating state, or the motor has a higher or smaller frequency of PWM in the second operating state than in the first operating state.

11. The electric power tool according to claim 1 or 2, wherein each of the first and second physical quantities is selected from a list including current, voltage, temperature and motor speed; and
wherein the second threshold corresponds to an overload threshold and the first threshold corresponds to a light load threshold.

12. The method to control operation of the motor according to any of claims 10 to 11, wherein the step of transitioning the motor from the first operating state to the second operating state upon detection of the following:
when a current measured by the load detector constantly stays above a first pre-set current threshold, accumulated time of the current constantly or intermittently staying above the second pre-set current threshold greater than the first pre-set current threshold exceeds a pre-defined period of time;
when a voltage measured by the load detector constantly stays below a first pre-set voltage threshold, accumulated time of the voltage constantly or intermittently staying below the second pre-set threshold less than the first pre-set threshold exceeds a pre-defined period of time; and
when a motor speed measured by the load detector constantly stays below a first pre-set motor speed threshold, accumulated time of the motor speed constantly or intermittently staying below the second pre-set motor speed threshold less than the first pre-set motor speed threshold exceeds a pre-defined period of time.

13. The method to control operation of the motor according to any of claims 10 to 12, further comprising deactivating the motor after the motor has operated in the second operating state for a predetermined period of time,
wherein the pre-determined period of time is defined based on the temperature of the power tool, and/or a cumulative time of the power tool in the second operating state.

14. The method to control operation of the motor according to any of claims 10 to 13, further comprising controlling the motor to constantly operate in a second operating state when the number of times the motor triggering overload protection reaches a pre-set number, or when the number of times the motor is transitioned from the first operating state to the second operating state reaches a pre-set number.

15. The method to control operation of the motor according to any of claims 10 to 14, further comprising storing and updating parameters of the second operating state in a memory to prevent loss of parameters caused by power loss,
wherein the parameters are used together with detection of the load detector by the controller to determine subsequent operating state of the motor, and wherein the parameters is selected from a list at least including a motor speed, a temperature of the power tool, and duration of the motor in the second operating state.
